# EUROPEAN PATENT SPECIFICATION

(11) **EP 0 400 098 B1**
(45) Date of publication and mention of the grant of the patent: **31.08.1994**
(21) Application number: 89905277.3
(22) Date of filing: 07.04.1989
(51) Int. Cl.: C09K 19/38, C09K 19/00, G02F 1/1333

(54) **LIGHT MODULATING MATERIALS COMPRISING LIQUID CRYSTAL MICRODROPLETS DISPERSED IN A BIREFRINGENT POLYMERIC MATRIX**
LICHT MODULIERENDE MATERIALIEN ENTHALTEND FLÜSSIGKRISTALLMIKROTRÖPFEN DISPERGIERT IN EINER POLYMERMATRITZE
MATERIAUX MODULANT LA LUMIERE COMPRENANT DES MICRO-GOUTTELETTES DE CRISTAUX LIQUIDES DISPERSEES DANS UNE MATRICE POLYMERE BIREFRINGENTE

(30) Priority: 11.04.1988 US 180215; 04.11.1988 US 267232; 20.03.1989 US 324051
(43) Date of publication of application: 05.12.1990
(73) Proprietor: KENT STATE UNIVERSITY, Kent, OH 44242 (US)
(72) Inventor: DOANE, Joseph, W., Kent, OH 44240 (US); WEST, John, L., Munroe Falls, OH 44262 (US)
(74) Representative: Adams, William Gordon
(86) International application number: US8901446
(87) International publication number: WO8909807

(56) References cited:
- JA-A-63 243 165
- US-A- 4 673 255
- US-A- 4 685 771
- US-A- 4 688 900
- J. West, Mol. Cryst. Liq. Cryst. 157, 427, 1988 See the abstract, Figure 1, and the Experimental section
- M. Amano et al. Mol. Cryst. Liq. Cryst. 164, 77, 1988. See the abstract and the results and discussion
- H. Finkleman et al. Mol. Cryst. Liq. Cryst. 89 23, 1982. See the introduction and page 26.

## Description

### BACKGROUND OF THE INVENTION

### 1. Technical Field

This invention relates to liquid crystal light modulating materials and, more particularly, to light modulating materials comprising liquid crystal microdroplets dispersed in a birefringent, light transmissive synthetic resin matrix.

### 2. Description of the Related Art

The advantages associated with light modulating materials prepared as phase-separated dispersions of liquid crystal microdroplets in light transmissive, synthetic resins matrices are discussed in U.S. Patent Nos. 4,671,618; 4,673,255; 4,685,771; and 4,688,900, the disclosures of which are incorporated by reference. Such materials are referred to as polymer dispersed liquid crystal (PDLC) materials.

The method of phase separation can be carried out by polymerization (PIPS), thermal induction (TIPS), or solvent evaporation (SIPS). As disclosed in U.S. Patent Nos. 4,685,771 and 4,688,900, epoxy resins are useful in these techniques. For PIPS, a matrix-providing composition containing liquid crystal and uncured epoxy is polymerized by the addition of a curing agent, e.g., a fatty amine, or by ultraviolet light, to yield microdroplets of liquid crystal in a thermoset polymeric epoxy resin. For TIPS, a matrix-providing composition containing liquid crystal and epoxy resin modified by curing with a non-cross-linking curing agent, such as monoalkylamine, so as to exhibit thermoplastic behavior, is heated and then cooled to yield microdroplets of liquid crystal in a thermoplastic polymeric epoxy resin.

Electrically addressable, light modulating materials prepared by phase separation techniques have employed liquid crystals exhibiting positive dielectric anisotropy. Such materials are opaque to incident light in the absence of an applied electric field and are transmissive to incident light in the presence of a field.

Mechanical entrapment techniques have been used to fabricate devices employing liquid crystals exhibiting both positive dielectric anisotropy (U.S. Patent No. 4,435,047) and negative dielectric anisotropy (French Patent No. 2,139,537). Devices employing negative dielectric anisotropic liquid crystals are fairly transparent in the OFF-state and increase opacity as a function of applied voltage in the ON-state.

The various techniques of preparing light modulating materials having microdroplets of liquid crystal in a light transmissive resin matrix can be accompanied by techniques of matching and mismatching the effective index of refraction of the microdroplets to the index of refraction of the matrix in order to achieve a desired viewing angle in which displays, windows, etc. incorporating such materials may be made viewable or clear. For example, in the case of PDLC materials made with liquid crystal exhibiting positive dielectric anisotrophy, the ordinary index of refraction typically is matched to the refractive index of the matrix so that in a field-ON state the display or window appears visible or clear because the optical axes of refraction of the microdroplets are aligned parallel to the field and normal to the viewing surface. In the field-OFF state, the optical axes are misaligned or randomly oriented so that incident light is scattered and the display or window appears opaque.

In windows or displays as described above in which the ordinary index of refraction of the liquid crystal is matched to the refractive index of the matrix, the device appears most transparent (field-ON state) when viewed directly in the direction of the field which is usually normal to the viewing surface. Transparency decreases giving rise to increasing "haze" at increasing oblique angles until an essentially opaque appearance is detected at an oblique enough angle. This condition of haze results from the fact that the further the viewing angle is from the orthogonal, the greater is the perceived mismatch between the extraordinary indices of refraction of the liquid crystal microdroplets and the refractive index of the matrix.

It has now been discovered that it is possible to produce liquid crystal, light modulating material of the type described which is essentially haze-free and transparent at all viewing angles. This is accomplished by using a birefringent material as the matrix and matching the ordinary and extraordinary indices of refraction of the microdroplets to the ordinary and extraordinary indices of refraction of the matrix. When the optical axes of the microdroplets and the matrix are aligned or parallel, the material is transparent and there is no perceived mismatch of the indices regardless of the angle of view. The haze-free viewing angle is ±90° from the perpendicular to the viewing surface. Because of surface reflections, such as may occur at the inner and outer surfaces of the substrates, the actual full field of view may be about ±60°.

The new material can operate in the usual manner so that it is transparent in a field-ON state and opaque in a field-OFF state. Alternatively, it has been discovered that the new material can be made to operate in a reverse or "fail-safe" mode such that the material is transparent in the absence of a field and is opaque in a field-ON state.

From a first aspect, the invention provides a light modulating liquid crystal material comprising microdroplets of a liquid crystal phase dispersed in a light transmissive polymer matrix, characterized in that the polymer matrix is birefringent, the effective indices of refraction of the liquid crystal phase and the polymer matrix are matched for all directions of incident light so that the material is transparent and haze-free in one of a field-ON state or a field-OFF state, and the effective indices of refraction are mismatched for all directions of incident light so that the material is opaque in the other of the field-ON state or field-OFF state.

Advantageously, the liquid crystal phase has ordinary and extraordinary indices of refraction which are respectively matched to the ordinary and extraordinary indices of refraction of the polymer matrix, the material being transparent and haze-free when the optical axes of the liquid crystal phase and the polymer matrix are aligned and being opaque when the optical axes of the liquid crystal phase and the polymer matrix are not aligned.

The liquid crystal of the microdroplets or the polymer matrix may comprise a liquid crystal polymer. In the latter case, the polymer matrix may have mesogenic moieties with optical axes aligned relative to a surface of the material. The polymer matrix may comprise a liquid-crystal-side-group polymer; the liquid-crystal-side-groups could comprise a cyanobiphenyl side group, or have labile moieties capable of cross-linking with other moieties identical to themselves.

Such labile moieties can be cross-linked to permanently align the liquid-crystal-side-groups. In such case, the polymer matrix may comprise a liquid-crystal-side-group polymeric epoxy.

The polymer matrix may be such as exhibits a frequency dependent dielectric anisotropy.

In a particular embodiment of the invention, the liquid crystal phase exhibits negative dielectric anisotropy, the polymer matrix comprises a liquid-crystal-side-group polymer, the liquid-crystal-side-groups thereof exhibiting positive dielectric anisotropy, and the optical axes of the liquid crystal phase and the polymer matrix are aligned perpendicular to a viewing surface of the material, whereby the material is transparent in the absence of an applied field and is opaque in the presence of an applied field.

In another embodiment of the invention, the optical axes of the liquid crystal phase and a liquid crystal polymer matrix are parallel in a direction oblique to the viewing angle of incident light in a field-OFF, state; and the liquid crystal phase is responsive to an applied field to misalign its optical axes, whereby the material is opaque in the ON-state.

From a second aspect, the invention provides a method of making a light modulating liquid crystal material having the characteristic of displaying haze-free transparency for all directions of incident light comprising the step of forming microdroplets of a liquid crystal phase dispersed in a light transmissive polymer matrix, characterized in that the liquid crystal phase and polymer matrix are selected to have matched ordinary and extraordinary indices of refraction and by an alignment step in which the optical axis of the polymer matrix is aligned.

The method may include the step of forming a solution of liquid crystal and polymer forming material.

Advantageously, the polymer forming material is synthetic mesogenic resin matrix forming material and said alignment step also aligns an optical axis of the liquid crystal with an optical axis of the polymer forming material. The alignment step may be effected by applying an electric or magnetic field to the material. The alignment is preferably fixed so that it is maintained in the absence of an electric or magnetic field, e.g. by cross-linking or solidifying the polymer forming material. Solidification can be brought about by cross-linking the mesogenic moiety.

As recognized by those in the art, the extraordinary index of refraction, nₑ of uniaxial liquid crystal is observed for a linearly polarised light wave where the electric vector is parallel to the optical axis. Thus, the optical axes of the birefringent matrix and the liquid crystal microdroplets of the net PDLC material will be understood to lie in the same directions associated with the respective extraordinary indices of refraction. It will also be understood that the direction associated with the ordinary indices of refraction of the birefringent matrix and the microdroplets is established by the electric vector vibrating perpendicular to the respective optical axes.

Polymeric liquid crystals are known in the art. Polymeric liquid crystals or liquid crystalline polymers are unions of mesogenic units and polymer main chain. The mesogenic units and the polymer main chain may be combined in two ways to form two types of liquid crystalline polymers - those where the mesogenic unit is contained in the main chain of the polymer and those wherein the mesogenic unit is attached as a pendant (side-chain) from the polymer main chain. The general synthesis, structure and properties of liquid crystalline polymers are discussed in 57 Pure & Appl. Chem., 1009 (1985) and in Polymer Liquid Crystals, Academic Press, Inc., 1982.

The present invention contemplates either main chain or side chain polymers for the microdroplets or the matrix. The preferred liquid crystal is a side chain polymer, since the side chain mesogenic units are more easily alignable in a field than main chain units. The new PDLC materials of the invention incorporating the preferred liquid-crystal-line-side-group polymeric matrix are generally characterized by haze-free full field of view (no angular dependence), an optional reverse or "fail-safe" mode of operation, and improved electrical responses requiring a lower driving voltage, as compared to previous PDLC material.

The preferred liquid crystal polymeric matrix may be made from any suitable synthetic prepolymer cured by a mesogenic curing agent, or it may be made from an uncured resin having mesogenic units cured by a suitable curing agent for the resin. For example, a liquid-crystal-side-chain PDLC material is made by PIPs by mixing liquid crystal with the mesogenic curing agent and uncured synthetic resin and thereafter curing to induce polymerization of the matrix with concomitant microdroplet formation. Liquid-crystal-side-chain PDLC materials are fabricated by PIPS by mixing liquid crystal with curing agent and uncured synthetic resin having a mesogenic side chain, and thereafter curing to induce polymerization of the matrix with concomitant microdroplet formation. Liquid-crystal-side-chain PDLC materials may be fabricated by TIPS by warming a mixture of liquid crystal and polymerized synthetic resin having liquid-crystal-side-chains to a temperature at which the resin and liquid crystal form a homogeneous solution and thereafter cooling the solution to induce microdroplet formation. Liquid-crystal-side-chain PDLC materials may also be fabricated by the SIPS technique by withdrawing solvent from a solution of liquid crystal and resin having mesogenic units to induce droplet formation.

A preferred matrix comprises a liquid-crystal-side-group synthetic polymer of the modified thermoplastic type, such as the epoxies, or poly(vinyl butyral), poly (vinyl acetate), poly(vinyl formal), polycarbonate, poly(vinyl methyl ketone), poly(methyl acrylate), poly(cyclohexyl methacrylate), poly(isobutyl methacrylate) and poly(methyl methacrylate) and equivalents thereof. The liquid-crystal-side-group preferably comprises a cyanobiphenyl. The cyanobiphenyl moiety is preferably spaced from the polymer main chain by a flexible alkyl spacer of sufficient length to allow the mesogenic moieties to align in a common direction. An example of a suitable mesogenic curing agent is a cyanobiphenyl alkoxy amine.

The mesogenic units of the liquid crystal polymeric matrix can be aligned in different ways. When the mesogenic units have positive anisotropy, an ac or magnetic field will cause the optical axes to be aligned parallel to the field, i.e., in a direction which usually is normal to the viewing surface. This alignment can be made to persist after the field is removed by cross-linking the polymeric matrix, by operating the material below the glass transition temperature, or by surface treatment of the glass substrates which contain the material.

When the device described above goes from the transparent state to the opaque state, the effective refractive index of the microdroplets change. This can happen in several different ways. One is a change in the director configuration, for example to, a radial-type structure, that alters the value of the microdoplets' effective refractive index. Various types of droplet director configurations have been described in the literature. It will be understood that the director configuration of the droplets in the OFF-state can depend upon the droplet size, the elastic properties of the liquid crystal, and the surface conditions imposed by the polymer. Another mechanism to change the refractive index of the droplets is a change in the orientation of the optical axes of the droplets imposed by a non-spherical shape or by surface anchoring conditions at the droplet wall. Non-spherical droplets with random orientations can sometimes occur during the phase separation process and can provide a random orientation of the optical axes of the droplets in the absence of a field. Such conditions change the effective refractive index of the droplets relative to that of the polymer matrix and render the material opaque in the field-OFF state.

A light modulating device, such as a window or light shutter, etc., incorporating the new haze-free PDLC material of the present invention can be made to operate in the usual way so that it is opaque in a field-OFF state and transparent or light transmissive in a field-ON state. This is accomplished by making the material so that the optical axis of the birefringent matrix is oriented normal to the viewing surface of the material. In the ON-state, an ac field aligns the optical axes of the liquid crystal microdroplets which also have positive dielectric anisotropy, parallel with the optical axis of the matrix, i.e. normal to the viewing surface. Since the ordinary and extraordinary indices of the microdroplets and the matrix are matched, the material is haze-free for all directions of incident light in the ON-state. In the OFF-state, the director configuration of the microdroplets is changed so that the effective refractive index of the microdroplets is mismatched with respect to the effective refractive index of the matrix for all directions of incident light, whereby incident light is scattered and the material is opaque.

The new PDLC material of the invention also can be made to operate in a reverse or fail-safe mode such that the material is transparent in the OFF-state and opaque in the ON-state. In one embodiment of the new reverse mode operating material, liquid crystal microdroplets are phase dispersed in a birefringent, light transmissive matrix, preferably, a liquid crystal polymeric matrix, by any of the techniques described above. As in other embodiments of the invention, the ordinary and extraordinary indices of refraction of the microdroplets are respectively matched to those of the matrix. After the material has been made, oppositely directed shear forces are applied to align the optical axis of the matrix obliquely to the viewing surface. The shear stress also serves to elongate the microdroplets and align their optical axes parallel to the optical axis of the matrix. The effective refractive indices of the microdroplets and matrix are thus matched so that in the OFF-state the material is transparent and haze-free for all directions of incident light. When the material is incorporated into a light shutter device and a field is applied normal to the viewing surface, the microdroplets will align either parallel or perpendicular to the field depending upon whether the microdroplets have positive or negative anisotropy, respectively. In either situation, the field causes the effective refractive indices of the microdroplets to be mismatched with respect to the effective refractive index of the matrix so that the material is light scattering and opaque.

Another embodiment of a reverse or fail-safe mode operating material is made with liquid crystal microdroplets having a bipolar structure and negative dielectric anisotropy. The liquid crystal microdroplets are phase dispersed in a birefringent matrix, preferably a liquid crystal polymeric matrix wherein the mesogenic units have positive anisotropy. The optical axis of the matrix is aligned during its formation by application of an ac field. The bipolar liquid crystal microdroplets naturally align with the matrix so that the optical axes of the microdroplets and matrix are normal to the viewing surface of the material. Since the ordinary and extraordinary indices of refraction of the microdroplets are respectively matched to those of the matrix, the resulting material is transparent and haze-free for all directions of incident light in the OFF-state. In the ON-state, the negative dielectric anisotropic liquid crystal microdroplets respond to the electric field by aligning in a direction perpendicular to the field, thereby causing a mismatch in the indices of refraction between the matrix and the microdroplets for all angles of view. The reverse mode material using a low molecular weight liquid crystal exhibiting negative dielectric anisotropy for the microdroplet can be prepared by any of the SIPS, TIPS or PIPS methods of phase separation, and the liquid-crystal-side-groups of polymeric matrix aligned perpendicular to a viewing surface of the material by an ac field.

The low molecular weight liquid crystal employed in the full field of view PDLC material or device made according to the invention may be of the type that switches its dielectric anisotropy from positive to negative as a function of the frequency to which it is exposed. By way of example, this type of liquid crystal exhibits negative dielectric anisotropy at a high frequency and positive anisotropy at a low frequency. Similarly, the polymeric liquid crystal may be of the type that switches the sign of its dielectric anisotropy depending upon the value of frequency.

The use of a so-called cross-over frequency liquid crystal in the microdroplets allows for the fabrication of windows and devices with enhanced contrast and increased ease of alignment of the liquid crystal microdroplets with respect to the liquid-crystal-side-group of the matrix. This is because at a given frequency, the liquid crystal component of the matrix may be caused to align in one direction, while at the same frequency the liquid crystal component of the microdroplets may be caused to align in a direction perpendicular to the first.

Other features, advantages and a fuller understanding of the invention will become apparent to those skilled in the art from the following description of the best modes of the invention and the accompanying drawings.

### Brief Description of the Drawings

Figures 1(A) and 1(B) are diagramatic, fragmentary cross-sectional views of a light shutter device in the ON-and-OFF-states, respectively, the device containing a sheet of the light modulating material of the invention depicted with a few representive microdroplets of liquid crystal contained in a liquid crystal polymeric matrix.

Figure 2(A) is a diagramatic view of an apparatus for measuring the transparency of a device of Figure 1A for different directions of incident light.

Figure 2(B) is a graph of light transmission versus angle of incidence for a PDLC light shutter device made according to the invention in the transparent state compared with a similar graph of a PDLC shutter device in the transparent state made with an optically isotropic polymer.

Figures 3(A) and 3(B) depict a reverse mode or fail-safe light shutter device in which the optical axes of the droplets and the matrix are obliquely aligned by shear stress, the device being shown in the OFF-and-ON-states, respectively.

### Best Mode for Carrying Out the Invention

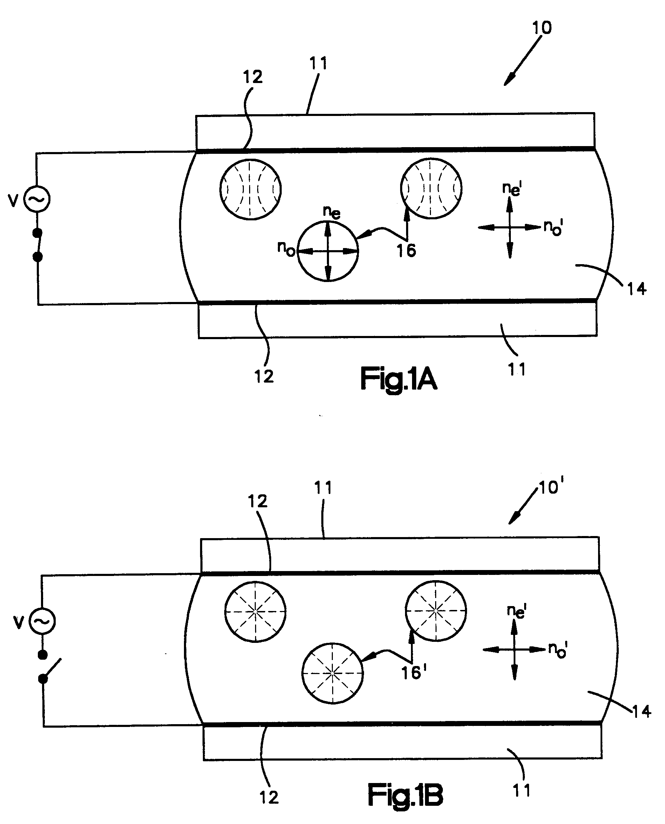

Figure 1 illustrates how liquid crystal PDLC light modulating material of the present invention can be fabricated so that in the field ON state the material is transparent for all directions of incident light and, hence, haze-free as compared with PDLC materials prepared with the usual thermoset and thermoplastic synthetic resins which have isotropic optical properties. The field of view of the known PDLC materials made from isotropic polymers is limited by an unavoidable mismatch of indices of refraction at wide angles of view in the ON-state. This is because the extraordinary index of refraction of the liquid crystal usually is aligned normal to the surface of the material in order to achieve transparency in the ON-state. As the angle of view widens from the perpendicular, there is a greater perceived mismatch between the refractive index of the matrix and the extraordinary indices of refraction of the liquid crystal microdroplets. The full field of view of the PDLC materials of the invention which employ a birefringent, light transmissive matrix, such as a liquid crystal polymeric resin, is due to the fact that the matrix for the liquid crystal droplet is itself liquid crystalline possessing the same optical properties of the droplets so that the effective refractive index of the droplets can be matched to that of the matrix for all directions of incident light, whereby there is no light scattering in any direction or haze. The effective refractive indices of the matrix and microdroplets are matched for all directions of incident light when the ordinary and extrordinary refractive indices of the droplets are respectively matched to the ordinary and extraordinary refractive indices of the polymer matrix, and the optical axes of the droplets are aligned parallel to the optical axes of the matrix.

In Figure 1(A), the light modulating shutter device incorporating the new haze-free PDLC material of the invention is generally indicated by reference numeral 10. The device 10 comprises a pair of glass or plastic substrates 11 and a birefringent, polymeric matrix 14 containing phase dispersed microdroplets 16 of liquid crystal. The inner surfaces of the glass substrates 11 have transparent conducting electrode coatings 12 attached to an ac power source of voltage V. In accordance with a preferred embodiment of the invention, the matrix 14 is a polymer having pendant liquid crystal side groups with positive dielectric anisotropy. The ordinary index of refraction, n₀, and the extraordinary index of refraction, nₑ, of the microdroplet 16 are respectively matched to the ordinary index of refraction n₀' and the extraordinary index of refraction nₑ' of the birefringent matrix 14.

As also shown in Figure 1(A), the optical axes of the matrix 14 and the microdroplets 16, which will be understood to lie in the same directions associated with the respective extraordinary indices of refraction, are aligned parallel. Since the optical axes of the microdroplets are parallel to the optical axis of the polymer resin matrix, and since the ordinary and extraordinary indices of refraction of the microdroplets and the matrix are respectively matched, the effective refractive index of the microdroplets is matched to that of the matrix in all directions. Thus, in the ON-state of Figure 1(A), the device 10 is non-scattering and transmissive to all directions of incident light except for surface reflections from the inner and outer surfaces of the substrates 11.

It is possible to match the refractive indices of the microdroplets with those of the matrix by choosing similar materials for the liquid crystal pendants of the side chain polymer matrix 14 and for the low molecular weight liquid crystal of the microdroplets 16. Cyanobiphenyl materials are preferred when a large positive dielectric anisotropy is desired. It is possible to align the optical axes of the microdroplets and the matrix by application of an electric or magnetic field during fabrication of the device 10. For example, when the matrix 14 is a polymer having liquid crystal side groups with positive dielectric anisotropy, the optical axes of the side groups can be aligned perpendicular to the viewing surface of the device 10 by applying an ac voltage of suitable strength to the conducting electrodes 12 while the polymer liquid crystal is at an elevated temperature in the nematic phase. The homeotropic alignment of the matrix may be made to persist after removal of the ac voltage by treating the surfaces of the substrates 12 in an known manner, or by cooling and operating the device 10 below the glass transition temperature of the aligned polymer liquid crystal, and/or by cross-linking the polymer. Cross-linking can be accomplished by providing the side groups of the polymer with a labile moiety, especially one having a double bond, that is subject to cross-linking with another moiety like itself with ultra violet radiation, thermal radiation, free radical polymerization, or the like.

The light shuttering capability of the device 10 in Figure 1(A) is demonstrated when the power source is disconnected so as to result in the droplet configuration shown in Figure 1(B). In the device 10' shown in Figure 1(B), the matrix 14 remains aligned in the OFF-state with its effective refractive index unchanged. The nematic director configuration of the microdroplets 16' is changed, thereby altering the effective refractive index so that it is mismatched from that of the matrix. This mismatch causes light scattering in all directions of incident light. The director configuration of the microdroplets 16' is illustrated in Figure 1(B) as radial, but it will be understood that the configuration may be any other type which also alters the effective refractive index. For example, if the microdroplets are not spherical in shape, the orientation of the optical axes of the resulting configuration may be altered when the device is switched to the field OFF state, thereby causing the effective refractive index of the microdroplets to be mismatched from that of the matrix.

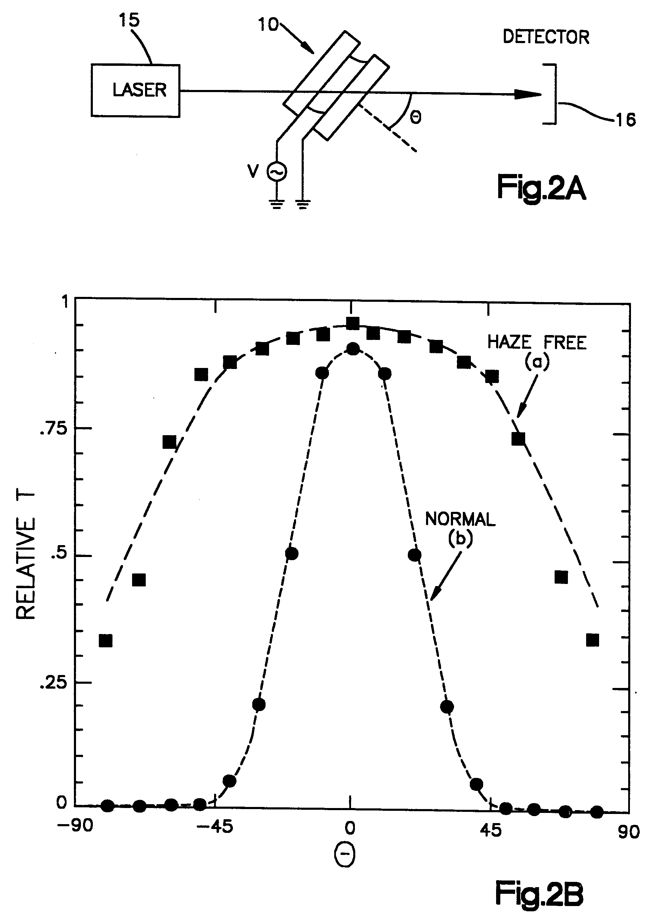

Referring now to Figure 2(A), an arrangement is shown for measuring the transparency of a PDLC light shutter device, such as the device 10, for different directions of incident light. A laser 15 is mounted to pass a beam through the device 10 to a detector 16 which measures the percentage of light transmission. The device 10 is mounted so that it can be oriented at different angles theta in the laser beam. The angle of incidence ϑ is measured from the normal to the surface of the device 10.

Figure 2(B) is a graph of transmission T versus angle of incidence ϑ. The percent transmission was measured as the sample was rotated the indicated number of degrees from normal incidence. Curve (a) is for the PDLC material made according to the invention with an index matched liquid crystal side group epoxy. Curve (b) is for a PDLC material made with an optically isotropic epoxy, as disclosed, for example, in U.S. Patents 4,671,618; 4,673,255; 4,685,771; and 4,688,900. The dashed and dotted lines are used to facilitate comparison. Curve (b) shows that the percentage of light transmission through material having an optically isotropic matrix drops sharply a few degrees either side of normal incidence. With the material of the invention, Curve (a), made with a birefingent matrix, light transmission begins to drop sharply about ±60° from the normal due to reflections from the inner and outer surfaces of the glass substrates. Were it not for such reflections, Curve (a) essentially would be a straight line showing no change in light transmission through angles of ±90° from normal incidence.

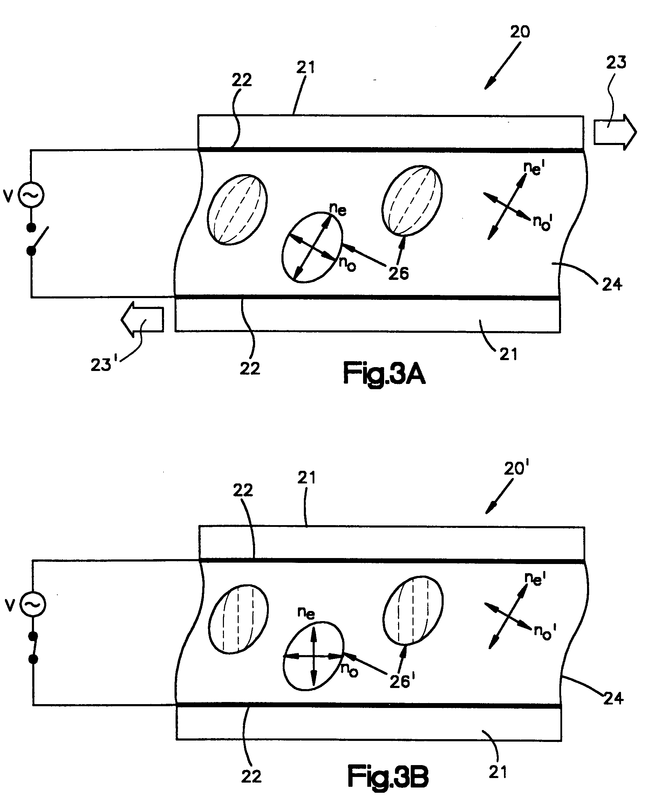

A reverse-mode or fail-safe light modulating shutter device is illustrated in Figure 3. The field-OFF or transparent state off the light modulating shutter incorporating the new haze-free PDLC material of the invention is generally indicated in Figure 3(A) by reference numeral 20. The device 20 comprises a pair of glass or plastic substrates 21 coated with transparent electrodes 22 and a birefringent, polymer matrix 24 containing dispersed microdroplets 26 of liquid crystal. In accordance with a preferred embodiment of the invention, the matrix 24 is a polymer liquid crystal which is aligned in an oblique direction relative to the surface normal of the substrates 21 by a shear stress applied as indicated by the arrows 23, 23'. The shearing action also elongates and aligns the liquid crystal microdroplets 26. The ordinary index of refraction, nₒ, and the extraordinary index of refraction, nₑ, of the microdroplets 26 are respectively matched to the ordinary index of refraction nₒ' and the extraordinary index of refraction nₑ' of the birefringent matrix 24. As also shown in Figure 3(A), the optical axes of the matrix 24 and the microdroplets 26 are aligned parallel. Since the optic axes of the microdroplets are parallel to the optical axis of the polymer resin matrix, and since the ordinary and extraordinary indices of refraction of the microdroplets and the matrix are respectively matched, the effective refractive index of the microdroplets is matched to that of the matrix in all directions. Thus, in the OFF-state of Figure 3(A), the device 20 is non-scattering and transmissive to all directions of incident light except for surface reflections from the outside and inside of the glass or plastic substrates 21.

It is possible to align the optical axes of the microdroplets with that of the matrix by shear action when the droplets are of the bipolar configuration type as illustrated in Figure 3(A) by reference numeral 26, but it is to be understood that the configuration may be of any other type in which shearing action of the substrates induces a match of the effective refractive index of the droplets with that of the matrix for all directions of incident light.

It is also understood that materials may exist in which the optical axes of bipolar type droplets may naturally align locally with the local optical axis of the polymer matrix without applying shear stress to the substrates. In such a situation the effective refractive index of the droplets will be matched to the effective refractive index of the birefringent polymer matrix for all directions of incident light so that the resultant material is transparent for all viewing angles irrespective of the direction of alignment of the optical axis relative to normal light incidence.

The light shuttering capability of the device 20 in Figure 3(A) is demonstrated when the power source of voltage V is connected to the transparent conducting electrodes 22 which results in the droplet configuration 26' shown in Figure 3(B). In the device 20' shown in Figure 3(B), the matrix 24 remains fixed in orientation in the ON-state with its effective refractive index unchanged. The nematic director configuration of the microdroplets 26' is changed by alignment of their optical axes parallel to the field, thereby altering the effective refractive index so that it is mismatched from that of the matrix. This mismatch causes light scattering in all directions of incident light.

### Example 1

A liquid crystal epoxy polymer was prepared by mixing an equivalent weight ratio 1:1 of uncured epoxy (MK-107 available from Wilmington Chemicals) with a mesogenic ether-linked curing agent, BP-10, having the formula:

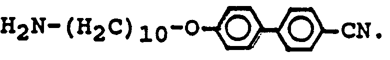

The mixture was heated to above the melting point of the curing agent (110°C) where a clear homogeneous solution was formed after mixing for about one minute. The solution was then allowed to cure for about 48 hours at a temperature of about 90°C. The cured epoxy liquid crystal polymer was then mixed with low molecular weight liquid crystal (E-7 available from EM Chemicals) in a 1:1 ratio by weight and dissolved in chloroform (approximately 85% by weight chloroform). The solution was mixed for several minutes in a vortex-type mixer and then pipetted in a uniform layer over 26um spacer on an indium tin oxide conducting electrode-bearing glass substrate. The solvent was then allowed to evaporate at room temperature until the resultant material turned opaque; any remaining solvent was driven off by heating on a hot plate at about 125°C for five minutes. A preheated conducting electrode-bearing glass substrate was then placed on top of the mixture to form a sandwich and the sample allowed to cool to room temperature in a period of about five minutes. The sample was translucent white in appearance. Application of an ac voltage of 85V at 60 Hz to the conducting electrodes turned the sample clear or transparent after a few minutes. Use of a polarizing microscope under conoscopic view indicated that the polymer liquid crystal and dispersed liquid crystal droplets were homeotropically aligned under the applied voltage. Removal of the voltage switched the sample opaque white in a time of less than one second. Reapplication of the ac voltage switched the sample clear in a time less than one second. During application of the 85V potential, the sample remained clear and haze-free even for oblique viewing angles. the angular dependence of light transmission through the sample in its transparent state was measured by directing the light from a helium/neon loser through the sample into a detector which measured the amount of light transmission through the sample as its orientation in the laser beam was varied. The angle between the direction of the laser beam and the normal of the glass substrates was varies between ±85° from normal incidence without any reduction in transmission other than reflection from the glass substrate surfaces (results shown in Fig. 2).

### Example 2

A liquid crystal epoxy polymer was prepared by mixing equivalent weights of epoxy and ether-linked amine curing agent. To the combined mixture was added low molecular weight liquid crystal in a ratio of 1:1 by weight, and the resultant mixture placed on an indium tin oxide coated glass substrate heated to a temperature above 110°C where it formed a homogeneous solution. After about 2 minutes of mixing a few 26um spacers were tapped out onto the solution and a preheated indium tin oxide coated glass substrate mounted on the sample. The sample was cured at 90°C for 48 hours. The sample was then slowly cooled over a period of about 30 minutes to room temperature. Large nematic droplets of approximately 3-5um in diameter were observed under a polarizing microscope, and the nematic director configuration of the droplets was observed to be of the radial type.

### Example 3

Equivalent weights of epoxy resin and amine curing compound were weighed out in a combined 1:1 ratio with low molecular weight liquid crystal on ITO coated glass slides. The entire slide was heated at 115 - 120°C for 1.5 to 3 minutes, with mixing. A preheated ITO glass slide was mounted on each sample, and the samples were annealed at 90°C for 48 hours.

Under the application of an ac 60 H_{z}, 85 volt potential, the resultant PDLCs exhibited haze-free wide viewing angles.

## Claims

1. A light modulating liquid crystal material comprising microdroplets of a liquid crystal phase dispersed in a light transmissive polymer matrix, characterized in that the polymer matrix is birefringent, the effective indices of refraction of the liquid crystal phase and the polymer matrix are matched for all directions of incident light so that the material is transparent and haze-free in one of a field-ON state or a field-OFF state, and the effective indices of refraction are mismatched for all directions of incident light so that the material is opaque in the other of the field-ON state or field-OFF state.

2. A liquid crystal material according to claim 1 further characterized in that the liquid crystal phase has ordinary and extraordinary indices of refraction which are respectively matched to the ordinary and extraordinary indices of refraction of the polymer matrix, the material being transparent and haze-free when the optical axes of the liquid crystal phase and the polymer matrix are aligned and being opaque when the optical axes of the liquid crystal phase and the polymer matrix are not aligned.

3. A liquid crystal material according to Claim 1 or claim 2 further characterized in that the polymer matrix comprises a liquid crystal polymer.

4. A liquid crystal material according to claim 1 or claim 2 wherein the polymer matrix has mesogenic moieties with optical axes aligned relative to a surface of the material.

5. A liquid crystal material according to claim 3 or claim 4 further characterized in that the polymer matrix comprises a liquid-crystal-side-group polymer.

6. A liquid crystal material according to claim 5 further characterized in that the liquid-crystal-side-group polymer comprises liquid-crystal-side-groups having labile moieties capable of cross-linking with other moieties identical to themselves.

7. A liquid crystal material according to claim 6 further characterized in that said labile moieties are cross-linked to permanently align the liquid-crystal-side-groups.

8. A liquid crystal material according to any one of claims 5 to 7 further characterized in that the polymer matrix comprises a liquid-crystal-side-group polymeric epoxy.

9. A liquid crystal material according to any one of claims 5 to 8 further characterized in that the liquid-crystal-side-group polymer comprises a cyanobiphenyl side group.

10. A liquid crystal material according to any preceding claim further characterized in that the polymer matrix exhibits a frequency dependent dielectric anisotropy.

11. A liquid crystal material according to claim 2 wherein the liquid crystal phase exhibits negative dielectric anisotropy, the polymer matrix comprises a liquid-crystal-side-group polymer, the liquid-crystal-side-groups thereof exhibiting positive dielectric anisotropy, and the optical axes of the liquid crystal phase and the polymer matrix are perpendicular to a viewing surface of the material, whereby the material is transparent in the absence of an applied field and is opaque in the presence of an applied field.

12. A liquid crystal material according to claim 3 wherein the optical axes of the liquid crystal phase and the polymer matrix are parallel in a direction oblique to the viewing angle of incident light in a field-OFF, state; and the liquid crystal phase is responsive to an applied field to misalign its optical axes, whereby the material is opaque in the ON-state.

13. A method of making a light modulating liquid crystal material having the characteristic of displaying haze-free transparency for all directions of incident light comprising the step of forming microdroplets of a liquid crystal phase dispersed in a light transmissive polymer matrix, characterized in that the liquid crystal phase and polymer matrix are selected to have matched ordinary and extraordinary indices of refraction and by an alignment step in which the optical axis of the polymer matrix is aligned.

14. A method according to claim 13 wherein said step of forming a liquid crystal phase interspersed with a light transmissive polymer matrix includes the step of forming a solution of liquid crystal and polymer forming material.

15. A method according to claim 14 wherein the polymer forming material is synthetic mesogenic resin matrix forming material and said alignment step also aligns an optical axis of the liquid crystal with an optical axis of the polymer forming material.

16. A method according to any one of claims 13 to 15 wherein said alignment step is carried out by applying an electric or magnetic field to the material.

17. A method according to claim 15 or claim 16 further characterized by the step of fixing the alignment so that it persists in the absence of an electric or magnetic field.

18. A method according to claim 17 further characterized in that the step of fixing is carried out by cross-linking the polymer forming material.

19. A method according to claim 17 wherein the step of fixing is carried out by solidifying the polymer forming material.

20. A method according to claim 19 wherein the solidifying step includes cross-linking the mesogenic moiety.

## Patentansprüche

1. Lichtmodulierendes Flüssigkristallmaterial mit in einer lichtdurchlässigen Polymer-Grundmasse dispergierten Mikrotröpfchen einer Flüssigkristallphase,
**dadurch gekennzeichnet,**
daß die Polymer-Grundmasse doppelbrechend ist, die effektiven Brechungsindizes der Flüssigkristallphase und der Polymer-Grundmasse entweder im eingeschalteten Feldzustand oder im ausgeschalteten Feldzustand für sämtliche Richtungen einfallenden Lichts angepaßt sind, so daß das Material transparent und schleierfrei ist, und die effektiven Brechungsindizes in dem anderen Zustand des ausgeschalteten bzw. des eingeschalteten Feldes für sämtliche Richtungen einfallenden Lichts fehlangepaßt sind, so daß das Material opak ist.

2. Flüssigkristallmaterial nach Anspruch 1,
**dadurch gekennzeichnet,**
daß die Flüssigkristallphase einen ordentlichen und einen außerordentlichen Brechungsindex aufweist, die an den ordentlichen bzw. den außerordentlichen Brechungsindex du Polymer-Grundmasse angepaßt sind, wobei das Material transparent und schleierfrei ist, wenn die optischen Achsen der Flüssigkristallphase und der Polymer-Grundmasse ausgerichtet sind, und opak ist, wenn die optischen Achsen der Flüssrigkristallphase und der Polymer-Grundmasse nicht ausgerichtet sind.

3. Flüssigkristallmaterial nach Anspruch 1 oder 2,
**dadurch gekennzeichnet,**
daß die Polymer-Grundmasse ein Flüssigkristallpolymer aufweist.

4. Flüssigkristallmaterial nach Anspruch 1 oder 2, bei dem die Polymer-Grundmasse mesogene Teile aufweist, deren optische Achsen in Bezug auf eine Oberfläche des Materials ausgerichtet sind.

5. Flüssigkristallmaterial nach Anspruch 3 oder 4,
**dadurch gekennzeichnet,**
daß die Polymer-Grundmasse ein Flüssigkristall-Seitengruppen-Polymer aufweist.

6. Flüssigkristallmaterial nach Anspruch 5,
**dadurch gekennzeichnet,**
daß das Flüssigkristall-Seitengruppen-Polymer Flüssigkristall-Seitengruppen mit labilen Teilen aufweist, die imstande sind, mit anderen, zu ihnen selbst identischen Teilen eine Vernetzung einzugehen,

7. Flüssigkristallmaterial nach Anspruch 6,
**dadurch gekennzeichnet,**
daß die labilen Teile vernetzt sind, um die Flüssigkristall-Seitengruppen permanent auszurichten.

8. Flüssigkristallmaterial nach irgendeinem der Ansprüche 5 bis 7,
**dadurch gekennzeichnet,**
daß die Polymer-Grundmasse ein polymeres Flüssigkristall-Seitengruppen-Epoxyverbindung aufweist.

9. Flüssigkristallmaterial nach irgendeinem der Ansprüche 5 bis 8,
**dadurch gekennzeichnet,**
daß das Flüssigkristall-Seitengruppen-Polymer eine Cyanobiphenyl-Seitengruppe aufweist.

10. Flüssigkristallmaterial nach irgendeinem vorhergehenden Anspruch,
**dadurch gekennzeichnet,**
daß die Polymer-Grundmasse eine frequenzabhängige dielektrische Anisotropie aufweist.

11. Flüssigkristallmaterial nach Anspruch 2, bei dem die Flüssigkristallphase negative dielektrische Anisotropie aufweist, die Polymer-Grundmasse ein Flüssigkristall-Seitengruppen-Polymer aufweist, dessen Flüssigkristall-Seitengruppen positive dielektrische Anisotropie besitzen, und die optischen Achsen der Flüssigkristallphase und der Polymer-Grundmasse senkrecht zu einer Sichtfläche des Materials sind, wodurch das Material bei Abwesenheit eines angelegten Feldes transparent und bei Anwesenheit eines angelegten Felder opak ist.

12. Flüssigkristallmaterial nach Anspruch 3, bei dem die optischen Achsen der Flüssigkristallphase und der Polymer-Grundmasse in einer Richtung schräg zum Betrachtungswinkel des einfallenden Lichts bei ausgeschaltetem Feld parallel sind und die Flüssigkristallphase auf ein angelegtes Feld dahingehend anspricht, daß ihre optischen Achsen fehlausgerichtet werden, wodurch das Material im eingeschalteten Zustand opak ist.

13. Verfahren zum Fertigen eines lichtmodulierenden Flüssigkristallmaterials mit der Eigenschaft, für sämtliche Richtungen einfallenden Lichts schleierfreie Transparenz zu zeigen, umfassend den Schritt der Bildung von Mikrotröpfchen einer Flüssigkristallphase, die in einer lichtdurchlässigen Polymer-Grundmasse dispergiert sind,
**dadurch gekennzeichnet,**
daß die Flüssigkristallphase und die Polymer-Grundmasse derart ausgewählt sind, daß sie angepaßte ordentliche und außerordentliche Brechungsindizes besitzen, und daß ein Ausrichtungsschritt erfolgt, bei dem die optischen Achse der Polymer-Grundmasse ausgerichtet wird.

14. Verfahren nach Anspruch 13, bei dem der Schritt der Bildung einer Flüssigkristallphase, die mit einer lichtdurchlässigen Polymer-Grundmasse durchsetzt ist, den Schritt der Bildung einer Lösung aus Flüssigkristall- und Polymer-bildenden Material enthält.

15. Verfahren nach Anspruch 14, bei dem das Polymer-bildende Material ein Material zur Bildung einer synthetischen mesogenen Harz-Grundmasse ist, wobei der Ausrichtungsschritt außerdem eine optische Achse des Flüssigkristalls mit einer optischen Achse des Polymer-bildenden Materials ausrichtet.

16. Verfahren nach irgendeinem der Ansprüche 13 bis 15, bei dem der Ausrichtungsschritt dadurch ausgeführt wird, daß an das Material ein elektrisches oder ein magnetisches Feld gelegt wird.

17. Verfahren nach Anspruch 15 oder 16,
**gekennzeichnet durch**
den Schritt des Fixierens der Ausrichtung derart, daß sie in Abwesenheit eines elektrischen oder magnetischen Feldes fortbesteht.

18. Verfahren nach Anspruch 17,
**dadurch gekennzeichnet,**
daß der Schritt des Fixierens dadurch ausgeführt wird, daß das Polymer-bildende Material vernetzt wird.

19. Verfahren nach Anspruch 17, bei dem der Schritt des Fixierens dadurch ausgeführt wird, daß das Polymer-bildende Material verfestigt wird.

20. Verfahren nach Anspruch 19, bei dem der Verfestigungsschritt das Vernetzen des mesogenen Teils beinhaltet.

## Revendications

1. Matière de cristaux liquides modulant la lumière comprenant des micro-gouttelettes d'une phase de cristaux liquides dispersée dans une matrice polymère transmettant la lumière, caractérisée en ce que la matrice polymère est biréfringente, les indices de réfraction efficaces de la phase de cristaux liquides et de la matrice polymère sont appariés pour toutes les directions de lumière incidente de sorte que la matière est transparente et exempte d'opacité dans un des deux états champ établi ou champ coupé, et les indices de réfraction efficaces sont pas appariés pour toutes les directions de lumière incidente de sorte que la matière est opaque dans l'autre des deux états champ établi ou champ coupé.

2. Matière de cristaux liquides selon la revendication 1, caractérisée de plus en ce que la phase de cristaux liquides possède des indices de réfraction ordinaire et extraordinaire qui sont respectivement appariés aux indices de réfraction ordinaire et extraordinaire de la matrice polymère, la matière étant transparente et exempte d'opacité quand les axes optiques de la phase de cristaux liquides et de la matrice polymère sont alignés et étant opaque quand les axes optiques de la phase de cristaux liquides et de la matrice polymère ne sont pas alignés.

3. Matière de cristaux liquides selon la revendication 1 ou 2, caractérisée de plus en ce que la matrice polymère comprend un polymère de cristaux liquides.

4. Matière de cristaux liquides selon la revendication 1 ou 2, dans laquelle la matrice polymère possède des fractions mésogènes avec des axes optiques alignés par rapport à une surface de la matière.

5. Matière de cristaux liquides selon la revendication 3 ou 4, caractérisée de plus en ce que la matrice polymère comprend un polymère à groupe latéral de cristaux liquides.

6. Matière de cristaux liquides selon la revendication 5, caractérisée de plus en ce que le polymère à groupe latéral de cristaux liquides comprend des groupes latéraux à cristaux liquides ayant des fractions labiles capables de se réticuler avec d'autres fractions identiques.

7. Matière de cristaux liquides selon la revendication 6, caractérisée de plus en ce que lesdites fractions labiles sont réticulées pour aligner de façon permanente les groupes latéraux à cristaux liquides.

8. Matière de cristaux liquides selon l'une quelconque des revendications 5 à 7, caractérisée de plus en ce que la matrice polymère comprend une résine époxy polymère à groupes latéraux de cristaux liquides.

9. Matière de cristaux liquides selon l'une quelconque des revendications 5 à 8, caractérisée de plus en ce que le polymère à groupes latéraux de cristaux liquides comprend un groupe latéral cyanobiphényle.

10. Matière de cristaux liquides selon l'une quelconque des revendications précédentes, caractérisée de plus en ce que la matrice polymère présente une fréquence dépendant de l'anisotropie diélectrique.

11. Matière de cristaux liquides selon la revendication 2, dans laquelle la phase de cristaux liquides présente une anisotropie diélectrique négative, la matrice polymère comprend un polymère à groupes latéraux de cristaux liquides, leurs groupes latéraux de cristaux liquides présentant une anisotropie diélectrique positive, et les axes optiques de la phase de cristaux liquides et de la matrice polymère sont perpendiculaires à une surface en vue de la matière, ainsi la matière est transparente en l'absence d'un champ appliqué et est opaque en présence d'un champ appliqué.

12. Matière de cristaux liquides selon la revendication 3, dans laquelle les axes optiques de la phase de cristaux liquides et de la matrice polymère sont parallèles dans une direction oblique à l'angle de vue de la lumière incidente dans un état de champ coupé; et la phase de cristaux liquides est sensible à un champ appliqué pour désaligner ses axes optiques, ainsi la matière est opaque à l'état champ établi.

13. Procédé pour fabriquer une matière de cristaux liquides modulant la lumière ayant la caractéristique d'afficher une transparence exempte d'opacité pour toutes les directions de lumière incidente comprenant l'étape consistant à former des micro-gouttelettes d'une phase de cristaux liquides dispersée dans une matrice polymère transmettant la lumière, caractérisé en ce que la phase de cristaux liquides et la matrice polymère sont choisies pour avoir des indices de réfraction ordinaire et extraordinaire appariés et par une étape d'alignement dans laquelle l'axe optique de la matrice polymère est aligné.

14. Procédé selon la revendication 13, dans lequel ladite étape de formation d'une phase de cristaux liquides interdispersée avec une matrice polymère transmettant la lumière inclut l'étape de formation d'une solution d'une matière formant un polymère et des cristaux liquides.

15. Procédé selon la revendication 14, dans lequel la matière formant le polymère est une matière formant une matrice de résine mésogène synthétique et ladite étape d'alignement aligne également un axe optique du cristal liquide avec un axe optique de la matière formant le polymère.

16. Procédé selon l'une quelconque des revendications 13 à 15, dans lequel ladite étape d'alignement est effectuée en appliquant un champ électrique ou magnétique à la matière.

17. Procédé selon la revendication 15 ou 16, caractérisée de plus par l'étape de fixation de l'alignement de sorte qu'il persiste en l'absence d'un champ électrique ou magnétique.

18. Procédé selon la revendication 17, caractérisé de plus en ce que l'étape de fixation est effectuée en réticulant la matière formant le polymère.

19. Procédé selon la revendication 17, dans lequel l'étape de fixation est effectuée en solidifiant la matière formant le polymère.

20. Procédé selon la revendication 19, dans lequel l'étape de solidification inclut la réticulation de la fraction mésogène.
